# EUROPEAN PATENT APPLICATION

(11) **EP 3 113 051 A1**
(43) Date of publication of application: **04.01.2017**
(21) Application number: 16157908.1
(22) Date of filing: 29.02.2016
(51) Int. Cl.: G06F 17/30, G06F 21/32

(54) **METHOD AND APPARATUS FOR ACQUIRING SEARCH RESULTS, COMPUTER PROGRAM AND RECORDING MEDIUM**

(30) Priority: 30.06.2015 CN 201510373332
(71) Applicant: Xiaomi Inc., Beijing 100085 (CN)
(72) Inventor: CHEN, Zhijun, Haidian District 100085 (CN); ZHANG, Tao, Haidian District 100085 (CN); LONG, Fei, Haidian District 100085 (CN)
(74) Representative: Robson, Aidan John

(57) **Abstract**

This disclosure discloses a method and apparatus for acquiring search results, a computer program and a recording medium, pertaining to the technical field of Internet technology. The method comprises: acquiring face information of a user by face recognition when detecting that a terminal has triggered a search event; sending a search request to a search server according to the face information and the information to be searched in the search event; receiving user-related search results determined by the search server according to the face information and the information to be searched. When a terminal triggers a search event, it sends the face information and the information to be searched to the search server for login and search, and finally receives the user-related search results determined by the search server according to the face information and the information to be searched, whereby the efficiency of login during the search process, the accuracy of the search results and the human-machine interactivity are improved.

## Description

### TECHNICAL FIELD

This disclosure is related to the field of Internet technology, in particular relates to a method and an apparatus for acquiring search results, a computer program and a recording medium.

### BACKGROUND

With developments of the Internet technology, searching function has become one of the most frequently used functions by users visiting the Internet.

At present, search engine websites can provide personalized searching function, i.e., selecting search results more in tune with the user's preferences according to the user's browsing and searching habits, and such a function requires the user to perform account login to the search engine website in advance. Currently, a general method of account login to a search engine website includes: starting an application program of the search engine website or opening a webpage of the search engine website, selecting login function and inputting the user account and password registered in advance, and the login function finishes when passing the verification by the search engine website. After logging in to the search engine website, the personalized search function for the user may be realized. However, according to the current operation procedures, the login efficiency during the search process is low, and the search accuracy and human-machine interactivity need to be improved.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In order to solve relevant technical problems, the embodiments of this disclosure provide a method and an apparatus for acquiring search results, a computer program and a recording medium. The technical solution are as follows:
according to a first aspect of the embodiments of this disclosure, there provides a method for acquiring search results, comprising:
by face recognition, acquiring face information of present user in response detecting that a terminal has triggered a search event;
sending a search request to a search server according to the face information and the information to be searched in the search event;
receiving the user--related search results determined by the search server through the search on the basis of the face information and the information to be searched.

Alternatively, acquiring face information of present user by face recognition includes:
judging whether a time interval between a current search event triggered and the search event triggered before has exceeded a preset time duration;
acquiring face information of present user by face recognition, if the time interval between the search event triggered present and the search event triggered before has not exceeded the preset time duration.

Alternatively, sending a search request to a search server according to the face information and the information to be searched in the search event includes:
acquiring a searching range identification in present setting; wherein, the searching range identification includes one or more of device identification, cloud service account, application account, location identification and network identification;
sending a search request to a search server according to the searching range identification, the face information and the information to be searched in the search event.

Alternatively, after sending a search request to a search server according to the face information and the information to be searched in the search event, the method further comprises:
receiving user-corresponding history search records returned by the search server;
displaying the user-corresponding history search records in a display list corresponded with a search input box.

Alternatively, after receiving the history search records corresponding to the user returned by the search server, the method further comprises:
hiding the pre-stored history search records not related to the user.

Alternatively, the method further comprises:
acquiring face information of the user by face recognition if it is detected that the user has not logged in;
sending a login request to the search server according to the face information;
receiving a login response returned from the search server after the search server finishes verification according to the face information.

According to a second aspect of the embodiments of this disclosure, there provides a method for acquiring search results, comprising:
receiving a search request sent by a terminal, the search request including at least the face information and the information to be searched;
verifying whether the face information belongs to a registered user;
if the face information belongs to a registered user, searching the information to be searched according to a personalized search pattern of the registered user, and determining search results related to the registered user;
sending the search results related to the registered user to the terminal.

Alternatively, the search request also includes: searching range identification; wherein, the searching range identification includes one or more of device identification, cloud service account, application account, location identification and network identification;
correspondingly, verifying whether the face information belongs to a registered user includes:
acquiring the registered user associated with the searching range identification;
verifying whether the face information belongs to the registered user associated with the searching range identification;
determining that the face information belongs to a registered user, if the face information belongs to the registered user associated with the searching range identification.

Alternatively, after verifying whether or not the face information belongs to a registered user associated with the searching range identification, the method further comprises:
if the face information does not belong to the registered user associated with the searching range identification, creating a user account according to the face information and the searching range identification.

Alternatively, the method further comprises:
if the face information belongs to a registered user, sending the history search records corresponding to the registered user to the terminal.

Alternatively, the method further comprises:
receiving a login request sent by the terminal, and the login request includes face information;
verifying whether the face information belongs to the registered user;
if the face information belongs to the registered user, sending a login response to the terminal.

According to a third aspect of the embodiments of this disclosure, there provides an apparatus for acquiring search results, comprising:
a first acquiring module, used for acquiring face information of present user by face recognition, when detecting that a terminal has triggered a search event;
a first sending module, used for sending a search request to a search server according to the face information and the information to be searched in the search event;
a first receiving module, used for receiving the user-related search results determined by the search server through the search on the basis of the face information and the information to be searched.

Alternatively, the first acquiring module comprises:
a judgment sub-module, used for judging whether a time interval between a current search event triggered and a previous search event triggered has exceeded a preset time duration;
a first acquiring sub-module, used for acquiring face information of present user by face recognition, when the time interval between the current search event triggered and the previous search event triggered has not exceeded the preset time duration.

Alternatively, the first sending module comprises:
a second acquiring sub-module, used for acquiring a searching range identification in present setting; wherein, the searching range identification includes one or more of device identification, cloud service account, application account, location identification and network identification.
a sending sub-module , used for sending a search request to a search server according to the searching range identification, the face information and the information to be searched in the search event.

Alternatively, the apparatus further comprises:
a second receiving module, used for receiving user-corresponding history search records returned by the search server;
a display module, used for displaying the user-corresponding history search records in a display list corresponded with a search input box.

Alternatively, the apparatus further comprises:
a hiding module, used for hiding the pre-stored history search records not related to the user.

Alternatively, the apparatus further comprises:
a second acquiring module, used for acquiring face information of a user by face recognition, when it is detected that the user has not logged in;
a second sending module, used for sending a login request to a search server according to the face information;
a third receiving module, used for receiving a login response returned from the search server after the search server has finished verification according to the face information.

According to a fourth aspect of the embodiments of this disclosure, there provides an apparatus for acquiring search results, comprising:
a fourth receiving module, used for receiving a search request sent by a terminal, and the search request at least includes the face information and the information to be searched;
a first verification module, used for verifying whether the face information belongs to a registered user;
a search module, used for searching the information to be searched according to a personalized search pattern of the registered user when the face information belongs to a registered user, and determining search results related to the registered user;
a third sending module, used for sending the search results related to the registered user to the terminal.

Alternatively, the search request also includes: searching range identification; wherein, the searching range identification includes one or more of device identification, cloud service account, application account, location identification and network identification;
correspondingly, the first verification module comprises:
a third acquisition sub-module, used for acquiring the registered user associated with the searching range identification;
a verification sub-module, used for verifying whether the face information belongs to the registered user associated with the searching range identification;
a determination sub-module, used for determining that the face information belongs to a registered user, when the face information belongs to the registered user associated with the searching range identification.

Alternatively, the apparatus further comprises:
an account creation module, used for creating a user account according to the face information and the searching range identification, when the face information does not belong to the registered user associated with the searching range identification.

Alternatively, the apparatus further comprises:
a fourth sending module , used for sending the history search records corresponded with the registered user to the terminal, when the face information belongs to a registered user,.

Alternatively, the apparatus further comprises:
a fifth receiving module, used for receiving a login request sent by the terminal, the login request carrying face information;
a second verification module, used for verifying whether the face information belongs to a registered user;
a fifth sending module, used for sending a login response to the terminal, when the face information belongs to the registered user.

According to a fifth aspect of the embodiments of this disclosure, there provides an apparatus for acquiring search results, comprising:
a processor;
a storage for storing processor executable instructions;
wherein, the processor is configured to:
acquiring face information of present user by face recognition, when detecting that a terminal has triggered a search event;
send a search request to a search server according to the face information and the information to be searched in the search event;
receive the user-related search results determined by the search server according to the face information and the information to be searched.

According to a sixth aspect of the embodiments of this disclosure, there provides an apparatus for acquiring search results, comprising:
a processor;
a storage for storing processor executable instructions;
wherein, the processor is configured to:
receive a search request sent by a terminal, and the search request at least includes face information and content to be searched;
verify whether the face information belongs to a registered user;
search the information to be searched according to a personalized search pattern of the registered user, if the face information belongs to a registered user, and determine the search results related to the registered user;
send the search results related to the registered user to the terminal.

In one particular embodiment, the steps of the method for acquiring search results are determined by computer program instructions.

Consequently, according to a seventh aspect, the invention is also directed to a computer program for executing the steps of a method for acquiring search results as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiments of this disclosure may have the following advantageous effect:

when a terminal triggers a search event, the terminal sends the face information and the information to be searched to the search server for login and search, and finally receives the user-related search results determined by the search server according to the face information and the information to be searched. Therefore, it improves the efficiency of login during the search process, the accuracy of the search results, and the human-machine interactivity.

### BRIEF DESCRIPTION OF THE DRAWINGS

Accompanying drawings herein are incorporated in and constitute a part of the description, for illustrating the embodiments according to the present disclosure and explaining the principles of the present disclosure together with the description.
Fig.1 is a flowchart showing a method for acquiring search results according to an embodiment;
Fig.2 is a flowchart showing a method for acquiring search results according to an embodiment;
Fig.3 is a flowchart showing a method for acquiring search results according to an embodiment;
Fig.4 is a flowchart showing a method for acquiring search results according to an embodiment;
Fig.5 is a flowchart showing a method for acquiring search results according to an embodiment;
Fig.6 is a block diagram showing an apparatus for acquiring search results according to an embodiment;
Fig.7 is a block diagram showing a first acquisition module in an apparatus for acquiring search results according to an embodiment;
Fig.8 is a block diagram showing a first sending module in an apparatus for acquiring search results according to an embodiment;
Fig.9 is a block diagram showing an apparatus for acquiring search results according to an embodiment;
Fig.10 is a block diagram showing a first verification module in an apparatus for acquiring search results according to an embodiment;
Fig.11 is a block diagram showing an apparatus for acquiring search results according to an embodiment (general structure of a mobile terminal);
Fig.12 is a block diagram showing an apparatus for acquiring search results according to an embodiment (general structure of a server).

### DETAILED EMBODIMENTS

In order to make the purpose, the technical solutions and advantages of the present disclosure more clear, the embodiments of this disclosure will be described in detail with reference to the accompany drawings.

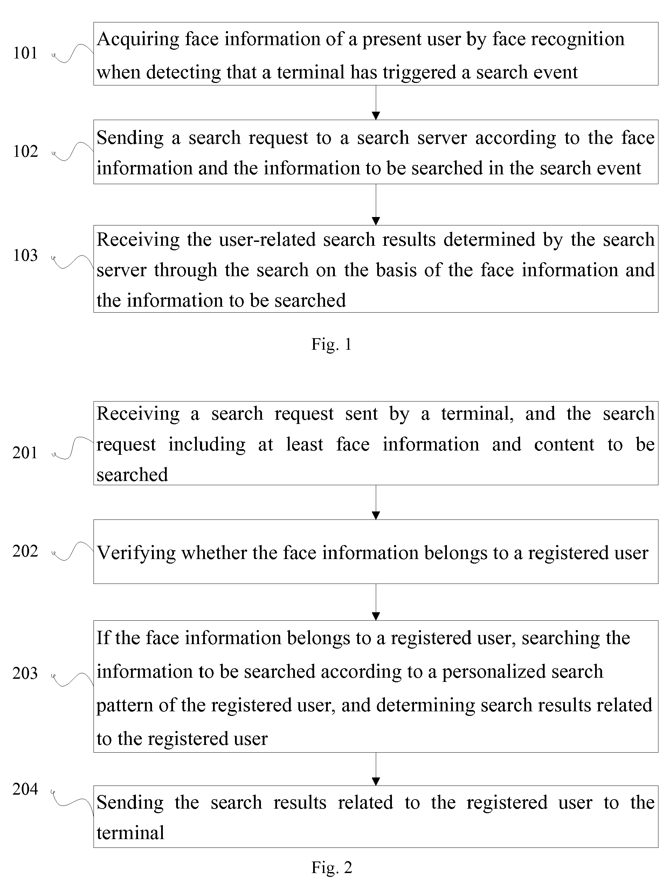

An embodiment of this disclosure provides a method for acquiring search results, this method embodiment is applied into a terminal, and as shown in Fig. 1, the method flow comprises:
in step 101, face recognition is performed to acquire face information of present user when detecting that a terminal has triggered a search event;
in step 102, a search request is sent to a search server according to the face information and the information to be searched in the search event;
in step 103, the user-related search results are determined by the search server through the search on the basis of the face information and the information to be searched are received.

In this embodiment of the disclosure, when a terminal triggers a search event, the terminal sends the face information and the information to be searched to the search server for login and search, and finally receives the user-related search results determined by the search server according to the face information and the information to be searched. Therefore, it improves the efficiency of login during the search process, the accuracy of the search results, and the human-machine interactivity.

Another embodiment of this disclosure provides a method for acquiring search results, this method embodiment is applied to a server, and as shown in Fig. 2, the method flow comprises:
in step 201, a search request sent by a terminal is received, and the search request at least includes the face information and the information to be searched;
in step 202, whether the face information belongs to a registered user is verified;
in step 203, if the face information belongs to a registered user, the information to be searched is searched according to a personalized search pattern of the registered user, and the search results related to the registered user are determined;
in step 204, the search results related to the registered user are sent to the terminal.

This embodiment of the disclosure receives the face information sent by the terminal and the information to be searched, verifies whether the user is a registered user according to the face information, and determines the search results related to the registered user according to the finally determined registered user. Therefore it improves the efficiency of login during the search process, the accuracy of the search results, and the human-machine interactivity.

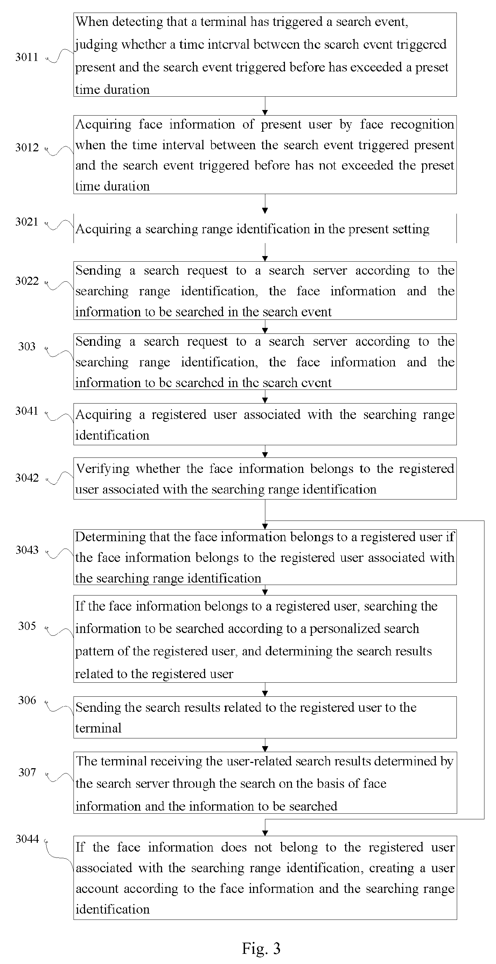

Another embodiment of this disclosure provides a method for acquiring search results, as shown in Fig. 3, the method flow comprises:
in step 301, face recognition is performed to acquire face information of present user when detecting that a terminal has triggered a search event.

Wherein, when a user starts the browser and opens a search engine website, the user can operate the terminal to trigger a search event; or, when the user starts the application program of the search engine website, the user can operate the terminal to trigger a search event.

For the triggering event, after the user submits the information to be searched in the search engine webpage or in the application program of the search engine website, and clicks confirmation buttons such as search confirmation button, the search event will be triggered. Wherein, the search event includes the information to be searched that is input by the user in the input box, and the information to be searched may include but be not limited to text, audio and video files, and pictures, etc..

Further, the way of acquiring face information is as follow: after detecting the triggering of a search event, starting the camera of a terminal to perform face recognition, and acquiring the face information of the user using the terminal at present.

Since the user usually operates the terminal by holding it in hand, in normal situations, the user would face to the screen of the terminal, so that the front camera of the terminal will be started to perform face recognition to acquire the face information.

Alternatively, since a user may search for many times when using the search engine webpage or the application program of the search engine website; for the terminal may finish login after the face information has been sent for the first time, correspondingly, it may be regarded that it is the same user who performs the search operations on the terminal within a certain time period, and thus there is no need to carry the face information while sending the search requests. Preset time duration can be set as a judgment basis for sending face information, and, whether to perform the step 301 is determined by comparing a time interval between the search event triggered present and the search event triggered before with the preset time duration.

Correspondingly, the step 301 may be implemented by the following steps:
in step 3011, it is judged that whether a time interval between the search event triggered present and the search event triggered before has exceeded a preset time duration, when detecting that a terminal has triggered a search event;
in step 3012, face recognition is performed to acquire face information of present user if the time interval between the search event triggered present and the search event triggered before has not exceeded the preset time duration.
In step 302, a search request is sent to a search server according to the face information and the information to be searched in the search event.

Wherein, the search request may carry the face information and the information to be searched.

Alternatively, since data size of the face information is too large, at present, the accuracy of face recognition has not yet reached a very precise matching degree. Therefore, this embodiment of the disclosure uses a face recognition verification method based on a certain searching range.

Correspondingly, a preset searching range identification may be carried in the sent search request, such that the search server may determine a searching range of the face information.

Wherein, the searching range identification includes one or more of device identification, cloud service account, application account, location identification and network identification.

Corresponding relationships of user accounts associated with the various types of searching range identifications are set in advance in the search server, and these corresponding relationships are set by users themselves according to needs when they register the accounts, or are set by the search server according to the searching range identifications reported at the time when the users register.

The searching range that may be set according to the searching range identifications respective includes:
device identification, for the search based on device, i.e., to match face information in a search request with the face information of one or more users corresponded with the device, thereby determining whether the user has been registered;
cloud service account, for the search based on a common cloud service account shared by one or more devices, i.e., to match the face information in the search request with the face information of one or more users corresponded with the cloud service account, thereby determining whether the user has been registered;
application account, for the search based on the an account of an application program, i.e., to match the face information in the search request with the face information of one or more users corresponded with the account of the application, thereby determining whether the user has been registered;
location identification, for the search based on the location information, i.e., to match the face information in the search request with the face information of one or more users corresponded with a certain range of location, thereby determining whether the user has been registered;
network identification, for the search based on the network device such as a router, i.e., to match the face information in the search request with one or more users accessing a network via network device such as a router within a certain range of location, thereby determining whether the user has been registered.

Alternatively, one or more searching range identifications may be set to jointly determine a searching range of the face information.

Correspondingly, the step 302 may be implemented by the following steps:
in step 3021, a searching range identification in present setting is acquired; wherein, the searching range identification includes one or more of device identification, cloud service account, application account, location identification and network identification;
in step 3022, a search request is sent to a search server according to the searching range identification, the face information and the information to be searched in the search event.

Correspondingly, the search request needs to include the searching range identification, the face information and the information to be searched.

In step 303, the search server receives the search request sent by the terminal, and the search request at least includes the face information and the information to be searched;

Alternatively, the search request also includes: searching range identification; wherein, the searching range identification includes one or more of device identification, cloud service account, application account, location identification and network identification;
in step 304, whether the face information belongs to a registered user is verified;
when the search request carries the searching range identification, the step 304 may be implemented by the following steps:
in step 3041, a registered user associated with the searching range identification is acquired.

The search server may store all relevant information of the registered user, including the face information, the personalized search pattern and the history search records of the user and so on.

By means of the searching range identification, it is possible to greatly narrow down the range for matching face information, for example, when the searching range identification is the device identification, for looking for the registered user associated with the device identification according to the device identification, in general, the number of users using a device would not be too much, therefore the calculation amount for matching the face information may be small.

In step 3042, whether the face information belongs to the registered user associated with the searching range identification is verified;
in step 3043, it is determined that the face information belongs to a registered user if the face information belongs to the registered user associated with the searching range identification.
in step 3044, if the face information does not belong to the registered user associated with the searching range identification, a user account is created according to the face information and the searching range identification.

Wherein, after the user account is created, a response message of creating the user account may be sent to the terminal, to inform the user that the user account has been successfully created, and to show to the user about the searching range identifications of the present account.

In step 305, if the face information belongs to a registered user, the information to be searched is searched according to a personalized search pattern of the registered user, and the search results related to the registered user are determined;

Wherein, based on the personalized search pattern of the registered user, the search results on the basis of the information to be searched by using the search server may be matched with the personalized search pattern of the registered user, and a preset number of top ranked search results are selected.

In step 306, the search results related to the registered user are sent to the terminal.

In step 307, the terminal receives the user-related search results determined by the search server through the search on the basis of the face information and the information to be searched.

In this embodiment of the disclosure, when a terminal triggers a search event, the terminal sends the face information and the information to be searched to the search server for login and search, the search server receives the face information and the information to be searched sent by the terminal and verifies whether the user has been registered on the basis of the face information, and then determines the search results related to the registered user on the basis of the finally determined registered user, and at last, the terminal receives the user-related search results determined by the search server according to the face information and the information to be searched, thereby the efficiency of login during the search process, the accuracy of the search results are improved, and the human-machine interactivity are improved.

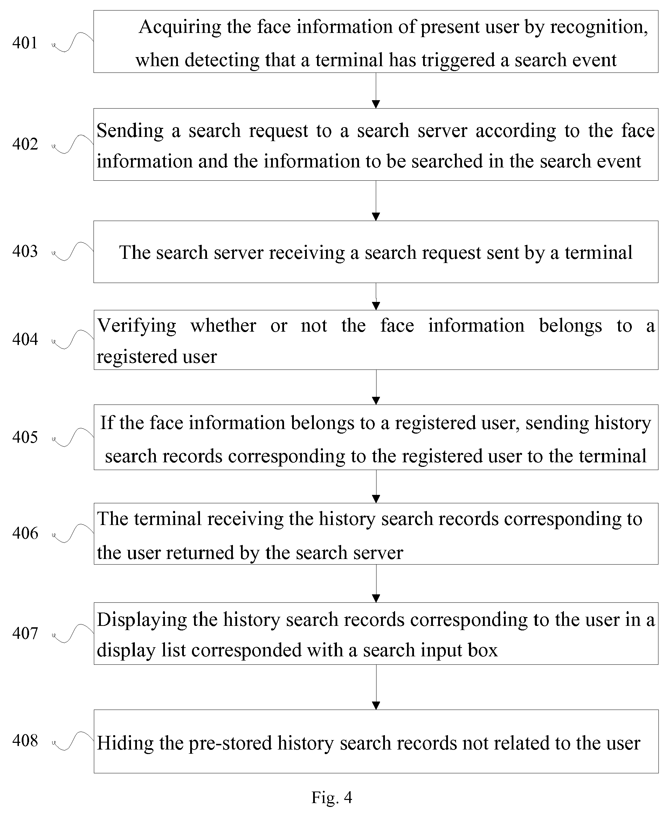

Another embodiment of this disclosure provides a method for acquiring search results, as shown in Fig. 4, the method flow comprises:
in step 401, face recognition is performed to acquire face information of present user when detecting that a terminal has triggered a search event;
in step 402, a search request is sent to a search server according to the face information and the information to be searched in the search event;
in step 403, the search server receives a search request sent by a terminal, and the search request at least includes the face information and the information to be searched;
in step 404, whether the face information belongs to a registered user is verified;
in step 405, if the face information belongs to a registered user, history search records corresponded with the registered user will be sent to the terminal.

Wherein, the search server may store all relevant information of the registered user, including the face information, the personalized search pattern and the history search records of the user.

After each registered user logs in with his user account, the search server may store the information to be searched sent by each registered user, and finally generate the history search records for each registered user.

In step 406, the terminal receives the history search records corresponding to the user returned by the search server.

In step 407, the history search records corresponding to the user are displayed in a display list corresponded with a search input box.

A pull-down list, provided in the search input box of the search engine webpage or in the application program of the search engine website, starts automatically for displaying the history search records returned by the search engine server.

In step 408, a hiding operation is performed to the pre-stored history search records not related to the user.

Wherein, the pre-stored history search records not related to the user may be the information to be searched, input or submitted by the user, stored in the terminal browser or in the application program of the search engine website.

By shielding these history search records irrelevant to the user, it is possible to avoid revealing of search privacy of the other users.

In this embodiment of the disclosure, after the terminal logs in to a search server using face information, the history search records pertaining to the user are returned to the terminal to be displayed, while the history search records not pertaining to the user will be hidden, therefore, the search efficiency for the user is improved, and the search records of other users are preventing from being revealed.

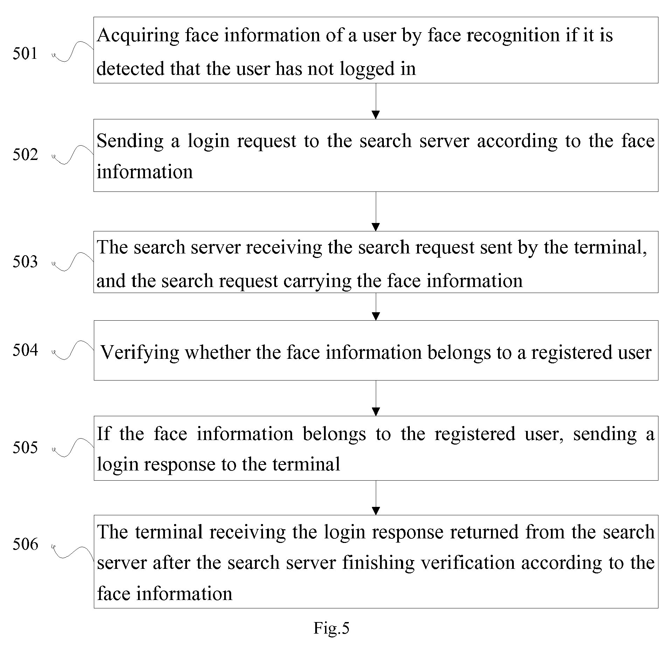

Another embodiment of this disclosure provides a method for acquiring search results, as shown in Fig. 5, the method flow comprises:
in step 501, face recognition is performed to acquire face information of a user if it is detected that the user has not a logged in;

In this embodiment of the disclosure, if it is detected that the user has not login when using a search engine webpage or an application program of the search engine website, the user may be suggested to perform a login operation by face information.

Wherein, in a pop-up dialog, the user may be suggested to whether perform a login operation or not, and if the user clicks confirmation, performing face recognition to acquire face information of the user in this step is then executed.

In step 502, a login request is sent to the search server according to the face information;

Alternatively, this embodiment of the disclosure may also execute the above mentioned step of acquiring searching range identification, and perform the corresponding matching process in the search server. Correspondingly, the login request may also carry the searching range identification.

In step 503, the search server receives the search request sent by the terminal, and the search request carries the face information.

In step 504, whether the face information belongs to a registered user is verified;

In step 505, if the face information belongs to the registered user, a login response is sent to the terminal.

In step 506, the terminal receives the login response returned from the search server after the search server has performed verification according to the face information.

Wherein, after login, search requests sent again by the terminal do not need to carry the face information, and the search server may also provide the service of personalized searching based on the login status of the terminal.

In this embodiment of the disclosure, by acquiring face information and allowing automatic login when it is detected that the user has not logged in, the complexity in operation of manually login is avoided and the human-machine interactivity is improved.

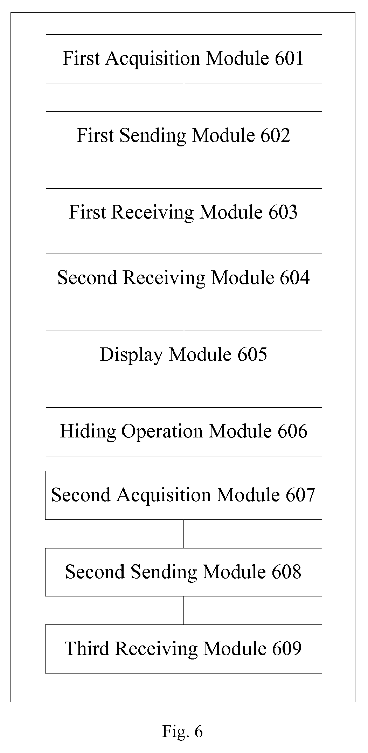

Corresponding to the method for acquiring search results provided by the above mentioned embodiments, another embodiment of this disclosure provides an apparatus for acquiring search results, the apparatus is applied in a terminal, and as shown in Fig. 6, the apparatus comprises:
a first acquisition module 601, used for acquiring face information of present user by face recognition when detecting that a terminal has triggered a search event;
a first sending module 602, used for sending a search request to a search server according to the face information and the information to be searched in the search event;
a first receiving module 603, used for receiving the user-related search results determined by the search server through the search on the basis of the face information and the information to be searched.

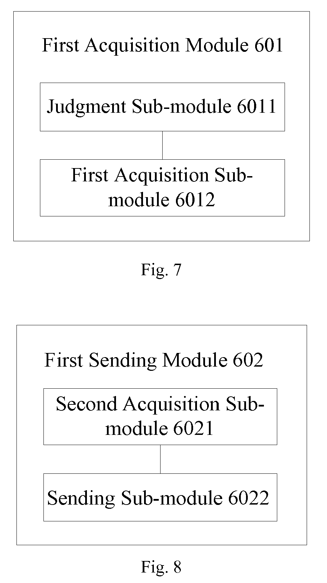

Wherein, as shown in Fig. 7, the first acquisition module 601 includes:
a judgment sub-module 6011, used for judging whether a time interval between the search event triggered present and the search event triggered before has exceeded a preset time duration;
a first acquisition sub-module 6012, used for acquiring face information of present user by face recognition, when the time interval between the search event triggered present and the search event triggered before has not exceeded the preset time duration.

Wherein, as shown in Fig. 8, the first sending module 602 includes:
a second acquisition sub-module 6021, used for acquiring a searching range identification in present setting; wherein, the searching range identification includes one or more of device identification, cloud service account, application account, location identification and network identification;
a sending sub-module 6022, used for sending a search request to a search server according to the searching range identification, the face information and the information to be searched in the search event.

Wherein, the apparatus further comprises:
a second receiving module 604, used for receiving history search records corresponding to the user returned by the search server;
a display module 605, used for displaying the history search records corresponding to the user in a display list corresponded with a search input box.

Wherein, the apparatus further comprises:
a hiding operation module 606, used for hiding the pre-stored history search records related to the user.

Wherein, the apparatus further comprises:
a second acquisition module 607, used for acquiring face information of a user by face recognition, when it is detected that the user has not logged in;
a second sending module 608, used for sending a login request to the search server according to the face information;
a third receiving module 609, used for receiving the login response returned from the search server after the search server has finished verification according to the face information.

In this embodiment of the disclosure, when a terminal triggers a search event, the terminal sends face information and the information to be searched to the search server for login and search, and finally receives the user-related search results determined by the search server according to the face information and the information to be searched, thereby the efficiency of login during the search process, the accuracy of the search results, and the human-machine interactivity are improved.

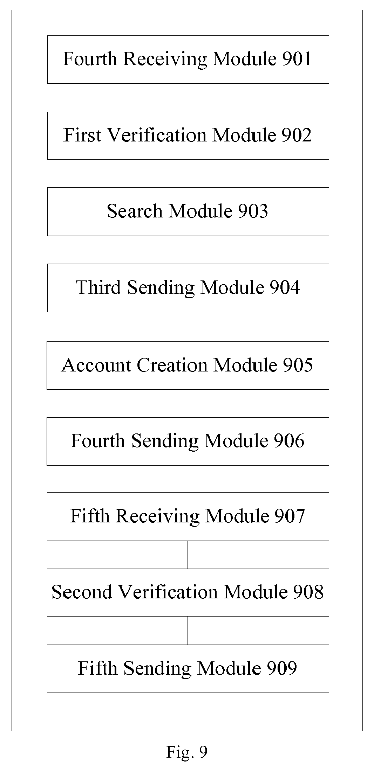

Corresponding to the method for acquiring search results provided by the above mentioned embodiments, another embodiment of this disclosure provides an apparatus for acquiring search results, the apparatus is applied in a server, and as shown in Fig. 9, the apparatus comprises:
a fourth receiving module 901, used for receiving a search request sent by a terminal, and the search request at least includes face information and the information to be searched;
a first verification module 902, used for verifying whether the face information belongs to a registered user;
a search module 903, used for searching, when the face information belongs to a registered user, the information to be searched according to a personalized search pattern of the registered user, and determining search results related to the registered user;
a third sending module 904, used for sending the search results related to the registered user to the terminal.

Wherein the search request also includes: searching range identification; wherein, the searching range identification includes one or more of device identification, cloud service account, application account, location identification and network identification.

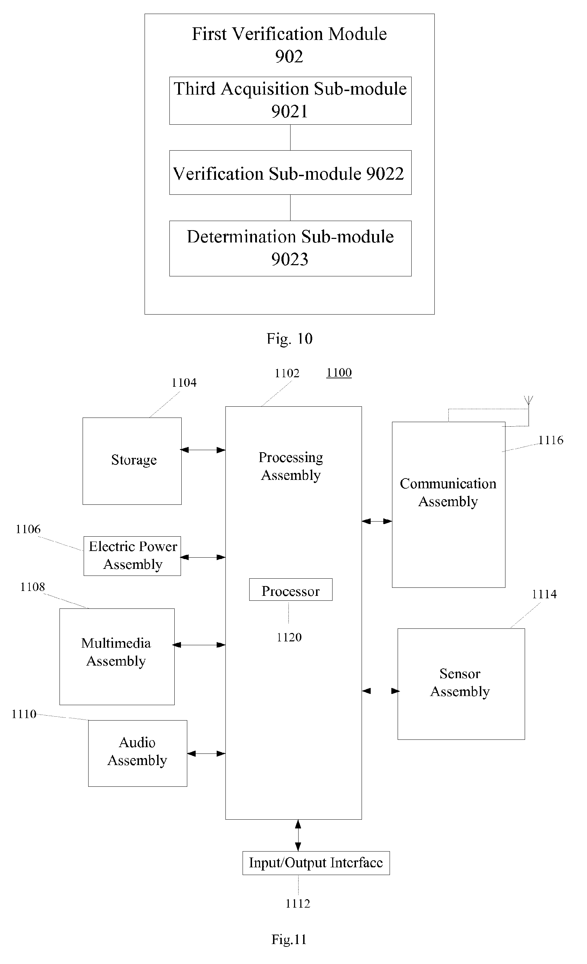

Correspondingly, as shown in Fig. 10, the first verification module 902 includes:
a third acquisition sub-module 9021, used for acquiring the registered user associated with the searching range identification;
a verification sub-module 9022, used for verifying whether the face information belongs to the registered user associated with the searching range identification;
a determination sub-module 9023, used for determining that the face information belongs to a registered user, when the face information belongs to the registered user associated with the searching range identification.

Wherein, the apparatus further comprises:
an account creation module 905, used for creating a user account according to the face information and the searching range identification, when the face information does not belong to the registered user associated with the searching range identification.

Wherein, the apparatus further comprises:
a fourth sending module 906, used for sending, when the face information belongs to a registered user, the history search records corresponded with the registered user to the terminal.

Wherein, the apparatus further comprises:
a fifth receiving module 907, used for receiving a search request sent by a terminal, and the search request carries face information;
a second verification module 908, used for verifying whether the face information belongs to a registered user;
a fifth sending module 909, used for sending a login response to the terminal, when the face information belongs to a registered user.

This embodiment of the disclosure receives the face information and the information to be searched sent by the terminal, verifies whether the user is a registered user according to the face information, and determines the search results related to a registered user according to the finally determined registered user, thereby the efficiency of login during the search process, the accuracy of the search results and the human-machine interactivity are improved.

Corresponding to the control apparatus for acquiring search results provided by the above mentioned embodiment, another embodiment of this disclosure provides a terminal 1100 as shown in Fig. 11. For example, the terminal 11 may be mobile phone, computer, digital broadcast terminal, message sending and receiving equipment, game console, tablet device, medical equipment, fitness equipment, personal digital assistant and terminal and so on. Alternatively, the terminal 1100 may be intelligent router, intelligent air purifier, intelligent water purifier and intelligent camera and so on.

With reference to Fig. 11, the terminal 1100 may include one or more of the following assemblies: a processing assembly 1102, a storage 1104, an electric power assembly 1106, a multimedia assembly 1108, an audio assembly 1110, an input/output (I/O) interface 1112, a sensor assembly 1114 and a communication assembly 1116.

The processing assembly 1102 generally controls the entire operations of the terminal 1100, such as operations related to display, telephone call, data communication, camera and recording. The processing assembly 1102 may include one or more processors 1120 to execute instructions, so as to accomplish all or a part of the steps of the above mentioned methods. In addition, the processing assembly 1102 may also include one or more modules to facilitate interaction between the processing assembly 1102 and other components. For example, the processing assembly 1102 may include a multimedia module to facilitate interaction between the multimedia assembly 1108 and the processing assembly 1102.

The storage 1104 is configured to store various types of data so as to support operations of the terminal 1100. Examples of these data include instructions used for any application program or method operated on the terminal 1100, contact person data, telephone book data, message, picture and video and so on. The storage 1104 may be implemented as any type of volatile or nonvolatile storage devices or their combinations, such as Static Random Access Memory (SRAM), Electrically Erasable Programmable Read Only Memory (EEPROM), Erasable Programmable Read Only Memory (EPROM), Programmable Read Only memory (PROM), Read Only Memory (ROM), magnetic memory, flash memory, magnetic disk or optical disc.

The electric power assembly 1106 supplies electric power to the various components of the terminal 1100. The electric power assembly 1106 may include a power source management system, one or more power sources and other components related to the generation, management and electric power distribution of the terminal 1100.

The multimedia assembly 1108 includes a screen that provides an output interface between the terminal 1100 and a user. In some embodiments, the screen may include a liquid crystal display (LCD) and a touch panel (TP). If the screen includes a touch panel, the screen can be implemented as a touch screen for receiving input signal from the user. The touch panel includes one or more touch sensors to sense touch, slide and gestures on the touch panel. The touch sensor may not only sense a boundary of the touch or slide actions, but also detect the time duration and pressure relevant to the touch or slide operations. In some embodiments, the multimedia assembly 1108 includes a front camera and/or a rear camera. When the terminal 1100 is in an operation mode, such as capture mode or video mode, the front camera and/or the rear camera may receive external multimedia data. Each of the front camera and the rear camera may be a fixed optical lens system or may have focal lengths and optical zooming functionality.

The audio assembly 1110 is configured to output and/or input audio signal. For example, the audio assembly 1110 includes a microphone (MIC), and, when the terminal 1100 is in an operation mode, such as call mode, recording mode and voice recognition mode, the microphone is configured to receive external audio signals. The received audio signals may be further stored in the storage 1104 or be transmitted via the communication assembly 1116. In some embodiments, the audio assembly 1110 further includes a loudspeaker for outputting audio signals.

The I/O interface 1112 provides an interface between the processing assembly 1102 and the periphery interface modules, and the mentioned periphery interface modules may be keyboard, click wheel and buttons, etc.. The buttons may include but not limited to: home button, volume button, start button and lock button.

The sensor assembly 1114 includes one or more sensors for providing the evaluation for every aspect of the terminal 1100. For example, the sensor assembly 1114 may detect on/off state of the terminal 1100 and detect the relative location of the components, for example, the components may be a display and a keypad of the terminal 1100; in addition, the sensor assembly 1114 may also detect position changes of the terminal 1100 or a component of the terminal 1100, whether the user contacting the terminal 1100 or not, the orientation or the acceleration/deceleration of the terminal 1100, and the temperature change of the terminal 1100. The sensor assembly 1114 may include a proximity sensor which is configured to be used for detecting existence of nearby objects when there is no physical contact. The sensor assembly 1114 may also include an optical sensor, such as CMOS or CCD image sensor, to be used in imaging applications. In some embodiments, the sensor assembly 1114 may further include an acceleration sensor, a gyroscope sensor, a magnetic sensor, a pressure sensor or a temperature sensor.

The communication assembly 1116 is configured to facilitate communication between the terminal 1100 and other devices. The terminal 1100 may access a wireless network on the basis of communication standards, such as WiFi, 2G or 3G, or their combinations. In an embodiment, the communication assembly 1116 receives broadcast signal or broadcast relevant information from external broadcast management systems via broadcast channels. In an embodiment, the communication assembly 1116 further includes a near field communication (NFC) module to promote short-range communications. For example, the NFC module may be implemented on the basis of Radio Frequency Identification (RFID) technology, Infrared Data Association (IrDA) technology, Ultra Wide Band (UWB) technology, Bluetooth (BT) technology and other technologies.

In the embodiments, the terminal 1100 may be implemented by one or more of Application Specific Integrated Circuit (ASIC), Digital Signal Processor (DSP), Digital Signal Processing Device (DSPD), Programmable Logic Device (PLD), Field Programmable Gate Array (FPGA), controller, microcontroller, microprocessor or other electronic elements, for performing the above mentioned methods.

In the embodiments, there also provides a non-temporary computer readable storage medium including instructions, such as the storage 1104 including the instructions that could be executed by the processor 1120 of the terminal 1100 for accomplishing the above mentioned methods. For example, the non-temporary computer readable storage medium may be ROM, Random Access Memory (RAM), CD-ROM, magnetic tape, floppy disk and optical data storage devices and so on.

In this embodiment of the disclosure, when a terminal triggers a search event, the terminal sends face information and the information to be searched to the search server for login and search, and finally receives the user-related search results determined by the search server according to the face information and the information to be searched, thereby the efficiency of login during the search process , the accuracy of the search results, and the human-machine interactivity is are improved.

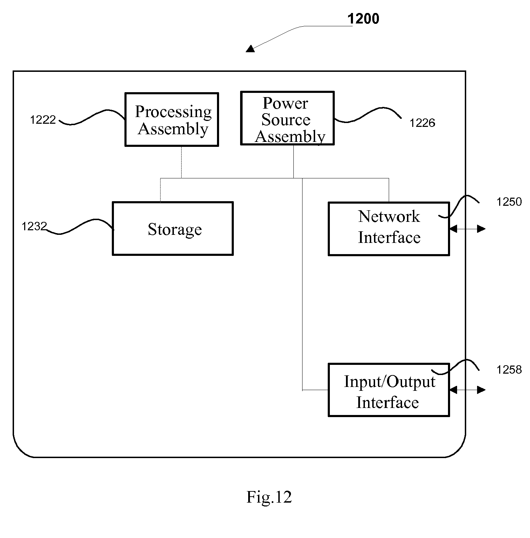

Fig.12 is a flowchart showing an apparatus 1200 for acquiring search results according to an embodiment. For example, the apparatus 1200 may be provided as a server. With reference to Fig. 12, the apparatus 12 comprises a processing assembly 1222 which further comprises one or more processors, and storage resource represented by the storage 1232 for storing instructions executable by the processing assembly 1222, such as an application program. The application program stored in the storage 1232 may include one or more modules, each corresponding with a set of instructions. In addition, the processing assembly 1222 is configured to execute the instructions, so as to perform the above mentioned methods for acquiring search results.

The apparatus 1200 may also include a power source assembly 1226 configured to execute power management or the apparatus 1200, a wired or wireless network interface 1250 configured to connect the apparatus 1200 to a network, and an input/output (I/O) interface 1258. The apparatus 1200 may operate the operation system stored in the storage 1232, such as Windows Server TM, Mac OS XTM, Unix TM, Linux TM, Free BSD TM or the like.

This embodiment of the disclosure receives the face information sent by the terminal and the information to be searched, verify whether the user is registered according to the face information, and determines the search results related to the registered user according to the finally determined registered user, thereby the efficiency of login during the search process, the accuracy of the search results are improved, and the human-machine interactivity are improved.

Face information may comprises any type of face information from a face recognition system such as a full face recognition, or partial face recognition such as iris identification.

Other embodiments of this disclosure will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for acquiring search results, **characterized by** comprising:
acquiring (101) face information of a present user by face recognition , in response to detecting that a terminal has triggered a search event;
sending (102) a search request to a search server according to the face information and the information to be searched in the search event;
receiving (103) the user-related search results determined by the search server through the search on the basis of the face information and the information to be searched.

2. The method according to claim 1, **characterized in that** acquiring face information of a present user by face recognition includes:
judging (3011) whether a time interval between the current search event triggered present and a previous search event triggered has exceeded a preset time duration;
acquiring (3012) the face information of the present user by face recognition if the time interval between the current search event triggered and the previous search event triggered has not exceeded the preset time duration.

3. The method according to claim 1, **characterized in that** sending a search request to a search server according to the face information and the information to be searched in the search event includes:
Acquiring (3011) a searching range identification in the present setting; wherein, the searching range identification includes one or more of device identification, cloud service account, application account, location identification and network identification.
sending (3022) a search request to a search server according to the searching range identification, the face information and the information to be searched in the search event.

4. The method according to any one of claims 1-3, **characterized in that** after sending a search request to a search server according to the face information and the information to be searched in the search event, the method further comprise:
Receiving (406) history search records corresponding to the user returned by the search server;
displaying (407) the history search records corresponding to the user in a display list corresponded with a search input box.

5. The method according to claim 4, **characterized in that** after receiving the history search records corresponding to the user returned by the search server, the method further comprises:
hiding (408) the pre-stored history search records not related to the user.

6. The method according to any one of claims 1-3, **characterized by** further comprising:
acquiring (501) face information of the user by face recognition, if it is detected that the user has a logged in operation;
sending (502) a login request to the search server according to the face information;
receiving (506) a login response returned from the search server after the search server has finished verification according to the face information.

7. An apparatus for acquiring search results, **characterized by** comprising:
a first acquisition module (601), used for acquiring the face information of present user by face recognition, when detecting that a terminal has triggered a search event;
a first sending (602) module, used for sending a search request to a search server according to the face information and the information to be searched in the search event;
a first receiving module (603), used for receiving the user-related search results determined by the search server through the search on the basis of the face information and the information to be searched.

8. The apparatus according to claim 7, **characterized in that** the first acquisition module comprises:
a judgment sub-module (6011), used for judging whether a time interval between the current search event triggered and a previous search event triggered has exceeded a preset time duration;
a first acquisition sub-module (6012) for acquiring face information of present user by face recognition when the time interval between the search event triggered present and the search event triggered before has not exceeded the preset time duration.

9. The apparatus according to claim 7, **characterized in that** the first sending module comprises:
a second acquisition sub-module (6021), used for acquiring a searching range identification in present setting; wherein, the searching range identification includes: one or more of device identification, cloud service account, application account, location identification and network identification.
a sending sub-module (6022), used for sending a search request to a search server according to the searching range identification, the face information and the information to be searched in the search event.

10. The apparatus according to any one of claims 7-9, **characterized by** further comprising:
a second receiving module, used for receiving history search records corresponding to the user returned by the search server;
a display module, used for displaying the history search records corresponding to the user in a display list corresponded with a search input box;
a hiding operation module for hiding the pre-stored history search records not related to the user.

11. The apparatus according to any one of claims 7-9, **characterized by** further comprising:
a second acquisition module (602), used for acquiring face information of the user by face recognition when it is detected that the user has not logged in;
a second sending module (6022), used for sending a login request to the search server according to the face information;
a third receiving module (9021), used for receiving a login response returned from the search server after the search server has finished verification according to the face information.

12. An apparatus for acquiring search results, **characterized by** comprising:
a processor;
a storage for storing processor executable instructions;
wherein the processor is configured to:
execute the executable instructions and thereby perform the steps of any of claims 1 to 6.

13. A computer program including instructions for executing the steps of a method for acquiring search results according to claim 1 to 6 when said program is executed by a computer.

14. A recording medium readable by a computer and having recorded thereon a computer program including instructions for executing the steps of a method for acquiring search results according to any one of claims 1 to 6.
